(19) Europäisches Patentamt / European Patent Office / Office européen des brevets

(11) **EP 4 782 885 A1**

(12) **DEMANDE DE BREVET EUROPEEN**

(43) Date de publication:
**29.07.2026 Bulletin 2026/31**

(21) Numéro de dépôt: **26154715.2**

(22) Date de dépôt: **28.01.2026**

(51) Classification Internationale des Brevets (IPC):
**G01S 19/20** (2010.01)    **G01S 19/21** (2010.01)

(52) Classification Coopérative des Brevets (CPC):
**G01S 19/20; G01S 19/21**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **28.01.2025 FR 2500867**

(71) Demandeurs:
• **THALES**
  **92190 Meudon (FR)**
• **Institut Mines Telecom**
  **91120 Palaiseau (FR)**

(72) Inventeurs:
• **VINCE, Victor**
  **92622 GENNEVILLIERS CEDEX (FR)**
• **HEURGUIER, Dominique**
  **92622 GENNEVILLIERS CEDEX (FR)**
• **VERVISCH-PICOIS, Alexandre**
  **91011 EVRY CEDEX (FR)**
• **RUBIO HERNAN, José Manuel**
  **91011 EVRY CEDEX (FR)**

(74) Mandataire: **Lavoix**
  **2, place d'Estienne d'Orves**
  **75441 Paris Cedex 09 (FR)**

(54) **PROCÉDÉ DE VÉRIFICATION D'INTÉGRITÉ DES MESURES ACQUISES PAR UNE PLURALITÉ DE RÉCEPTEURS GNSS, PROGRAMME D ORDINATEUR ET SYSTÈME DE VÉRIFICATION ASSOCIÉS**

(57) La présente invention concerne un procédé de vérification d'intégrité des mesures acquises par une pluralité de récepteurs GNSS, comprenant les étapes suivantes :
- pour chaque récepteur GNSS :
+ détermination (110) d'un vecteur de résidus à partir des mesures GNSS acquises par ce récepteur dans une fenêtre temporelle correspondante ;
+ détermination (130) d'une matrice élémentaire de covariance des résidus à partir dudit vecteur de résidus ;

- composition (140) d'une matrice globale de covariance ;
- détermination (150) d'une variable de test à partir de cette matrice de covariance ;
- comparaison (160) de la variable de test avec un seuil prédéterminé.

La dimension de chaque vecteur de résidus et de chaque matrice élémentaire de covariance est adaptée en fonction du nombre de satellites visibles par le récepteur GNSS correspondant.

FIG.2

**Description**

La présente invention concerne un procédé de vérification d'intégrité des mesures acquises par une pluralité de récepteurs GNSS. La présente invention concerne également un programme d'ordinateur ainsi qu'un système de vérification associés à ce procédé.

La présente invention s'appuie sur une méthode de contrôle d'intégrité collaborative existante décrite par J. RIFE dans l'article « Collaboration-Enhanced Receiver Integrity Monitoring (CERIM) » (publié en 2011 par « 14th International IEEE Conference on Intelligent Transportation Systems (ITSC) »).

L'invention se rapporte plus particulièrement au domaine de la navigation collaborative mise en œuvre par plusieurs récepteurs GNSS.

Par « récepteur GNSS « (de l'anglais Global Navigation Satellite System), on entend tout récepteur qui est apte à calculer sa position à partir des signaux issus de satellites faisant partie d'un système de navigation globale par satellites, appelé également système GNSS. Les signaux émis par ce système sont appelés par la suite signaux GNSS.

Dans le cadre de la navigation collaborative, plusieurs récepteurs GNSS transmettent leurs mesures relatives aux signaux GNSS reçus à une unité centrale.

Une telle unité centrale est alors apte à vérifier l'intégrité de ces mesures pour éventuellement détecter et éliminer des mesures qui sont corrompues.

De telles mesures peuvent être corrompues par exemple suite à un brouillage volontaire ou involontaire des signaux GNSS.

L'invention trouve donc particulièrement son application dans le domaine où une corruption des signaux GNSS est hautement probable.

Dans l'état de la technique, il existe déjà des méthodes permettant de vérifier l'intégrité des mesures acquises par plusieurs récepteurs GNSS, notamment dans le cadre d'une navigation collaborative.

Certaines de ces méthodes proposent l'estimation théorique de la covariance des mesures acquises par les différents récepteurs.

Toutefois, l'estimation théorique peut être imprécise et ne pas prendre en compte l'environnement et les corrélations.

Il existe également des méthodes proposant une estimation empirique de la covariance des mesures.

Toutefois, une telle estimation empirique n'est généralement pas possible dans les configurations très dynamiques, c'est-à-dire par exemple dans le cas de défilement rapide des satellites GNSS.

En tout état de cause, les méthodes existantes supposent la continuité temporelle de l'espace de mesure, c'est-à-dire la visibilité permanente des satellites GNSS pour chacun des récepteurs, ce qui n'est toujours pas le cas.

La présente invention a pour but de remédier à ces inconvénients et de proposer un procédé de vérification d'intégrité des mesures permettant de vérifier l'intégrité de ces mesures d'une manière précise et efficace et cela même dans un environnement très dynamique.

A cet effet, l'invention concerne un procédé de vérification d'intégrité des mesures acquises par une pluralité de récepteurs GNSS, chaque récepteur GNSS étant apte à acquérir dans une fenêtre temporelle une pluralité de mesures GNSS par rapport à chaque satellite visible par ce récepteur GNSS, le procédé comprenant les étapes suivantes mises en œuvre de manière itérative pour chaque fenêtre temporelle glissante :

- pour chaque récepteur GNSS :

    + détermination d'un vecteur de résidus à partir des mesures GNSS acquises par ce récepteur dans la fenêtre temporelle correspondante ;
    + détermination d'une matrice élémentaire de covariance des résidus à partir dudit vecteur de résidus ;

- composition d'une matrice globale de covariance à partir de l'ensemble des matrices élémentaires de covariance ;
- détermination d'une variable de test à partir de cette matrice de covariance ;
- comparaison de la variable de test avec un seuil prédéterminé ;

le procédé étant caractérisé en ce que la dimension de chaque vecteur de résidus et de chaque matrice élémentaire de covariance est adaptée en fonction du nombre de satellites visibles par le récepteur GNSS correspondant.

Suivant d'autres aspects avantageux de l'invention, le procédé comprend une ou plusieurs des caractéristiques suivantes, prises isolément ou suivant toutes les combinaisons techniquement possibles :

- lorsqu'un satellite n'est plus visible par un récepteur GNSS dans une fenêtre temporelle, les dimensions du vecteur de résidus correspondant et de la matrice élémentaire de covariance correspondante sont diminuées pour exclure toute mesure GNSS relative à ce satellite dans cette fenêtre temporelle ;

- lorsqu'un satellite devient visible par un récepteur GNSS dans une fenêtre temporelle, les dimensions du vecteur de résidus correspondant et de la matrice élémentaire de covariance correspondante sont augmentées pour inclure des nouvelles mesures GNSS relatives à ce satellite, lesdites nouvelles mesures étant complétées par des données théoriques relatives à ce satellite ;
- la dimension de la matrice globale de covariance est adaptée en fonction du nombre de récepteurs GNSS accessibles ;
- lorsqu'un récepteur GNSS n'est plus accessible dans une fenêtre temporelle, les dimensions de la matrice globale de covariance sont diminuées pour exclure toute mesure GNSS relative à ce récepteur GNSS ;
- lorsqu'un récepteur GNSS devient accessible dans une fenêtre temporelle, les dimensions de la matrice globale de covariance sont augmentées pour inclure des nouvelles mesures GNSS relatives à l'ensemble des satellites visibles par ce récepteur GNSS, lesdites nouvelles mesures étant complétées par des données théorique relative à ces satellites ;
- chaque composante de chaque vecteur de résidus correspond à la différence d'une pseudo-distance réelle et pseudo-distance théorique par rapport à un satellite visible par le récepteur GNSS correspondant, la pseudo-distance réelle étant déterminée à partir des mesures GNSS correspondant à ce satellite ;
- le procédé comprenant en outre une étape de détermination pour chaque vecteur de résidus, d'un vecteur de parité correspondant à une projection de ce vecteur de résidus dans un espace de parité ;
- la matrice élémentaire de covariance des résidus est déterminée directement à partir du vecteur de parité associé au vecteur de résidus correspondants.

L'invention concerne également un programme d'ordinateur comportant des instructions logicielles qui, lorsqu'elles sont exécutées par un ordinateur, mettent en œuvre le procédé tel que défini ci-dessus.

L'invention concerne finalement un système de vérification d'intégrité des mesures acquises par une pluralité de récepteurs GNSS, comprenant des moyens techniques configurés pour mettre en œuvre le procédé tel que défini ci-dessus.

L'invention apparaitra plus clairement à la lecture de la description qui va suivre, donnée uniquement à titre d'exemple non limitatif, et faite en référence aux dessins dans lesquels :

- [Fig. 1] La figure 1 est une vue schématique d'un système de vérification selon l'invention ;
- [Fig. 2] La figure 2 est un organigramme d'un procédé de vérification selon l'invention, le procédé de vérification étant mis en œuvre par le système de vérification de la figure 1.

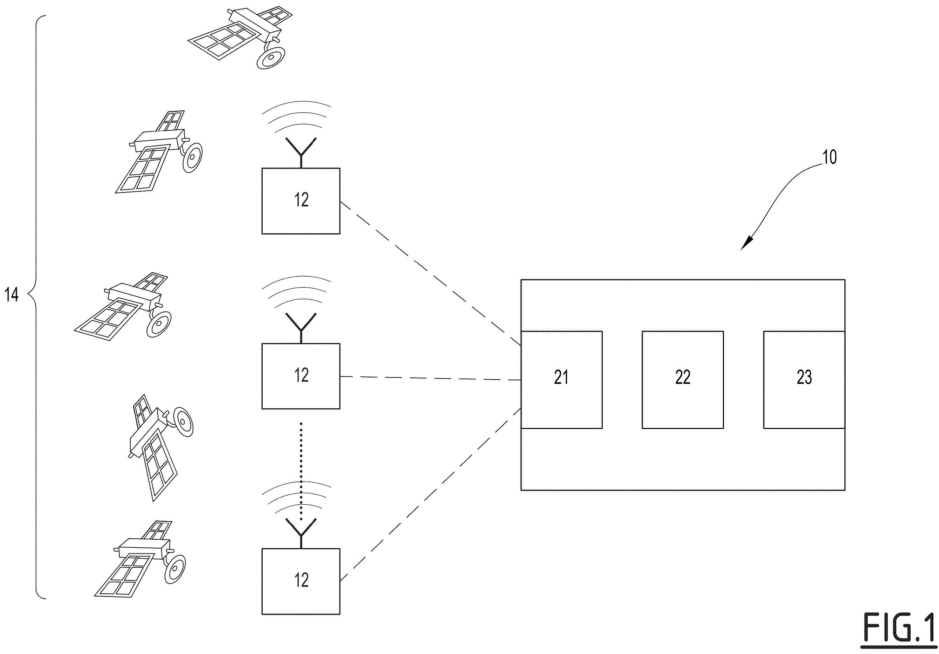

On a en effet illustré sur la figure 1, un système de vérification 10 permettant de vérifier l'intégrité des mesures acquises par une pluralité de récepteurs GNSS 12.

De manière connue en soi, chaque récepteur GNSS 12 présente un récepteur permettant de recevoir des signaux radioélectriques issus d'un système global de positionnement par satellites, appelé également système GNSS. Le système GNSS est par exemple le système GPS (de l'anglais Global Position System) ou alors le système Galileo. Le système GNSS peut aussi être considéré comme plusieurs systèmes en simultané GPS, Galileo, Beidou et autre.

Chaque récepteur GNSS 12 permet ainsi de recevoir ces signaux à partir d'une pluralité de satellites 14 faisant partie du système GNSS, afin de déterminer sa position géographique.

En particulier, pour ce faire, chaque récepteur GNSS 12 est apte à mesurer la distance entre chaque satellite visible par celui-ci et soi-même en effectuant une comparaison entre son horloge interne et le temps d'émission encodé dans chaque signal GNSS reçu.

Une telle mesure est appelée pseudo-distance.

Par ailleurs, chaque récepteur GNSS dispose d'informations concernant la pseudo-distance théorique avec chaque satellite 14 visible.

Une telle distance théorique est fournie par exemple en calculant le temps de trajet obtenue entre chacun des satellites 14 et le récepteur GNSS 12. Ce temps de trajet est corrigé via les éphémérides fournies dans le message de navigation.

À chaque instant, chaque récepteur GNSS 12 est apte à recevoir des signaux GNSS à partir d'un nombre limité de satellites 14. Ces satellites sont alors appelés visibles par le récepteur GNSS 12 correspondant.

Il doit être toutefois compris qu'avec le temps, les positions respectives entre le récepteur GNSS 12 et les satellites changent de sorte qu'au moins certains satellites 14 ne sont plus visibles et certains autres deviennent alors visibles. Des masquages peuvent notamment avoir lieu lorsque le récepteur GNSS 12 évolue dans un milieu encaissé où la vision du ciel est partiellement masquée par des infrastructures naturelle et/ou humaines.

Le système de vérification 10 est connecté à chacun des récepteurs GNSS 12 au moins dans une fenêtre temporelle donnée.

Ce système de vérification 10 peut par exemple être connecté au récepteur GNSS 12 correspondant par toute liaison techniquement possible, notamment une liaison radio.

Le système de vérification 10 est alors apte à recevoir des mesures GNSS acquises ou déterminées par les récepteurs GNSS 12 dans au moins certaines fenêtres temporelles.

Lorsque la réception de ces données est possible, le récepteur GNSS 12 correspondant est alors appelé accessible.

Autrement, ce récepteur GNSS 12 est appelé inaccessible.

Le système de vérification 10 peut ainsi former une unité centrale reliée à l'ensemble de récepteurs GNSS 12.

Alternativement, le système de vérification 10 est intégré dans au moins l'un des récepteurs GNSS 12. Dans un tel cas, il est relié à des moyens permettant de transmettre des mesures acquises par ce récepteur 12 par une liaison interne.

En référence à la figure 1, le système de vérification 10 comprend un module d'entrée 21, un module de traitement 22 et un module de sortie 23.

Le module d'entrée 21 présente un module de communication permettant de recevoir des données issues des récepteurs GNSS 12. Le module d'entrée 21 présente ainsi par exemple une interface de communication radio.

Le module de traitement 22 permet de traiter l'ensemble des données reçues par le module d'entrée 21 pour vérifier leur intégrité, comme cela sera expliqué en détail par la suite.

Enfin, le module de sortie 23 permet de délivrer le résultat de la vérification effectuée par le module de traitement 22 à tout système intéressé. Un tel système intéressé peut par exemple comprendre une interface de communication avec un opérateur.

Selon un mode particulier de réalisation de l'invention, chacun de ces modules 21 à 23 est implémenté au moins partiellement par un logiciel exécutable par un processeur. Dans un tel cas, le système de vérification 10 comprend en outre un processeur qui est apte alors à mettre en œuvre le logiciel associé à un tel module et une mémoire qui est apte à stocker un tel logiciel.

En complément ou de manière alternative, chacun des modules précités 21 à 23 présente au moins partiellement un circuit logique programmable de type FPGA (de l'anglais Field Programmable Gate Array) ou alors ASIC (de l'anglais Application-Specific Integrated Circuit).

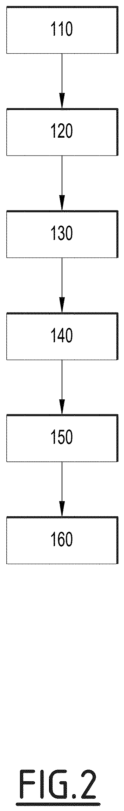

Le système de vérification 10 est apte à mettre en œuvre un procédé de vérification qui sera désormais expliqué en référence à la figure 2 présentant un organigramme de ses étapes.

Initialement, il est considéré que chacun des récepteurs GNSS 12 acquiert dans une fenêtre temporelle, par exemple d'une longueur prédéterminée, une pluralité de mesures GNSS qui correspondent par exemple aux pseudo-distances réelles avec les satellites correspondants.

Dans tout ce qui suit, il est supposé que les récepteurs GNSS 12 transmettent ces mesures au système de vérification 10 qui effectue alors l'ensemble des traitements numériques décrits en détail par la suite.

Alternativement, au moins certains de ces traitements peuvent être effectués directement par le récepteur GNSS 12 correspondant et un résultat de ce traitement peut être transmis au système de vérification 10 pour un autre traitement.

Les étapes suivantes du procédé sont mises en oeuvre de manière itérative pour chaque fenêtre temporelle déterminée de manière glissante à partir de la fenêtre temporelle précédente.

Lors d'une étape initiale 110, le module de traitement 22 détermine pour chaque récepteur GNSS 12 un vecteur de résidus **r** à partir des mesures GNSS transmises par ce récepteur 12 dans la fenêtre temporelle correspondante.

En particulier, chaque composante d'un tel vecteur de résidus **r** correspond à la différence d'une pseudo-distance réelle et d'une pseudo-distance théorique par rapport à l'un des satellites visibles par le récepteur GNSS correspondant. La position du récepteur doit satisfaire au mieux les différentes estimations de pseudo-distances théoriques entre chacun des satellites et le récepteur à l'instant t. Cette distance théorique peut donc être affinée par la méthode de Gauss-Newton (moindre carré) de manière à ce que la différence entre pseudo-distances théoriques et observés soit la plus petite possible. Il en résulte de cette différences un vecteur des résidus **r.**

Lors d'une étape 120 suivante, le module de traitement 22 détermine pour chaque récepteur GNSS 12 et pour chaque vecteur de résidus **r** associé à ce récepteur GNSS 12 un vecteur de parité **p.**

Ce vecteur de parité **p** correspond alors à une projection du vecteur de résidus correspondant dans un espace de parité. Cette projection est effectuée en utilisant une matrice **W** qui est constituée par les vecteurs de l'espace nul orthogonal à la matrice jacobienne de la matrice d'observation **H** : **W'.H**=0.

Autrement dit :

$$p=W'.r$$

La projection de chaque vecteur de résidus dans l'espace de parité permet d'éliminer les composantes redondantes du vecteur de résidus initial.

En utilisant cet espace de parité, il est possible de diminuer de quatre la dimension de chaque vecteur de résidus.

Lors de l'étape 130 suivante, le module de de traitement 22 détermine une matrice élémentaire de covariance $\Gamma_i$

associée à chaque vecteur de résidus directement à partir du vecteur de parité associé à ce vecteur de résidus.

Autrement dit, chaque matrice élémentaire de covariance est déterminée en utilisant la relation suivante :

$$\mathbf{\Gamma}_i = \mathbb{E}\left[\mathbf{p}_i \cdot \mathbf{p}_i^{\mathrm{T}}\right]$$

où $\mathbb{E}[\ldots]$ signifie l'espérance mathématique et $\mathbf{p}_i$ correspond à un vecteur de parité $\mathbf{p}$ ayant l'indice i sur une fenêtre glissante de N échantillon temporel.

Selon l'invention, lors de la mise en œuvre de ces étapes 110 à 130, la dimension de chaque vecteur de résidus ainsi que de chaque matrice élémentaire de covariance est adaptée en fonction du nombre de satellites 14 visibles par le récepteur GNSS 12 correspondant.

En particulier, lorsqu'un satellite qui était visible dans la fenêtre temporelle précédente n'est plus visible dans la fenêtre temporelle courante, la dimension du vecteur de résidus est diminuée d'un par rapport à l'itération précédente de ces étapes pour exclure toute mesure GNSS relative alors au satellite disparu dans la fenêtre temporelle courante.

Il est de même en ce qui concerne la matrice élémentaire de covariance correspondante. En particulier, par rapport à l'itération précédente, la dimension de cette matrice élémentaire de covariance est diminuée d'un pour enlever la ligne et la colonne correspondant aux mesures du satellite disparu.

Lorsqu'au contraire, un satellite qui n'était pas visible lors de l'itération précédente de cette étape devient visible par un récepteur GNSS 12 dans la fenêtre temporelle courante, les dimensions du vecteur de résidus correspondant ainsi que de la matrice élémentaire de covariance correspondante sont augmentées pour inclure des nouvelles mesures relatives à ce satellite. Il est à noter que ces nouvelles mesures sont complétées par des données théoriques relatives au satellite correspondant.

Les données théoriques peuvent être estimées de plusieurs manières.

Tout d'abord, la construction de la matrice de covariance $\Gamma_i$ vaut :

$$\begin{bmatrix} \sigma_1^2 & 0 & .. & 0 \\ 0 & \sigma_2^2 & .. & 0 \\ .. & .. & .. & .. \\ 0 & 0 & .. & \sigma_K^2 \end{bmatrix}$$

$K$ : correspond au nombre de satellite vus par le récepteur GNSS 12.

Ensuite, pour estimer chacun des sigmas $\sigma$ qui correspondent aux fluctuations normales des résidus pour chacun des satellites, deux manières peuvent être appliquées :

1. La première manière est de sommer les incertitudes qui ont une influence non négligeable sur l'estimation des pseudo-distances comme par exemple l'ionosphère, troposphère, le biais du récepteur etc ... :

$$\sigma_i^2 = \sigma_{i,URA}^2 + \sigma_{i,URE}^2 + \sigma_{i,tropo}^2 + \sigma_{i,mp}^2 + \sigma_{i,revr}^2 + \sigma_{i,rgb}^2$$

où $\sigma_{i,URA}^2, \sigma_{i,URE}^2, \sigma_{i,tropo}^2, \sigma_{i,mp}^2, \sigma_{i,rcvr}^2, \sigma_{i,rgb}^2$ désignent respectivement les valeurs suivantes :

- URA pour « User Range Accuracy » en anglais. C'est une mesure de la précision avec laquelle la position d'un satellite est connue. Les satellites GNSS transmettent une valeur URA pour indiquer la confiance que le système a dans la précision de la position du satellite ;
- UIRE pour « User Ionospheric Range Error » en anglais, et c'est la variance de l'erreur introduite par l'ionosphère. L'ionosphère peut perturber la propagation des signaux GNSS, particulièrement dans les bandes de fréquence utilisées, ce qui crée des erreurs de positionnement ;
- Tropo se réfère à l'erreur causée par la troposphère, qui est la couche de l'atmosphère terrestre la plus basse. Comme l'ionosphère, la troposphère peut retarder la propagation des signaux GNSS, ce qui affecte la précision des mesures de distance entre le récepteur et le satellite ;
- MP correspond à l'erreur due aux « multipath effects » (effets de trajets multiples). Il s'agit des interférences causées lorsque les signaux GNSS rebondissent sur des objets comme des bâtiments ou des montagnes avant d'atteindre le récepteur. Cela peut induire des erreurs importantes dans les mesures de distance ;
- Rcvr signifie « receiver noise » en anglais, ou bruit du récepteur. Cela correspond à la variance de l'erreur introduite par le matériel de réception lui-même, comme l'antenne et les composants électroniques ;
- RGB pour « range bias grid » en anglais. Le RGB est utilisé pour corriger les biais de distance dans certain systèmes GNSS. Ces biais peuvent être causées par des erreurs liées à l'ionosphère, à l'horloge des satellites ou à d'autre facteurs affectant la précision des signaux reçus.

2. La seconde manière est d'imaginer une équation à coefficients variables qui peuvent être estimés par plusieurs méthodes (calibrage etc...), et qui dépendent également de l'élévation $\theta_i$ du satellite i dans le ciel par rapport au récepteur :

$$\sigma_i = a_0 + a_1 e^{-\theta_i/\theta_c}$$

$\theta_i$ correspond à l'élévation du satellite pour laquelle l'incertitude de précision est estimée ; et
$a_0$, $a_1$, et $\theta_c$ sont des paramètres qui peuvent être estimés de différentes manières. Il est possible par exemple d'estimer ces paramètres en utilisant un échantillonnage aléatoire (méthode de Monte Carlo). Aussi comme indiqué par Yang et Rife, 2016, ils peuvent être ajustés de manière optimale aux données au temps t.

Ces mesures sont alors complétées par des données théoriques dans chaque fenêtre temporelle jusqu'à ce que le nombre de ces nouvelles mesures devienne satisfaisant pour estimer de manière précise ces nouvelles mesures.

Lors de l'étape 140 suivante, le module de traitement 22 compose une matrice globale de covariance $\Gamma$ à partir de l'ensemble des matrices élémentaires de covariance $\Gamma_i$ déterminées lors de l'étape 130 précédente.

En particulier, cette matrice globale de covariance $\Gamma$ comprend une concaténation diagonale des matrices élémentaires de covariance $\Gamma_i$ telle que déterminées précédemment.

Il est à noter que selon l'invention, la dimension de cette matrice globale de covariance est également adaptée en fonction du nombre de récepteurs GNSS 12 accessibles dans la fenêtre temporelle courante.

En particulier, lorsqu'un récepteur GNSS 12 qui était accessible dans la fenêtre temporelle précédente n'est plus accessible dans la fenêtre temporelle courante, les dimensions de cette matrice globale de covariance sont diminuées pour exclure toute mesure GNSS relative à ce récepteur GNSS 12.

Cela comprend alors la suppression de l'ensemble de lignes et de colonnes correspondant à ce récepteur inaccessible.

Lorsqu'au contraire, un récepteur GNSS 12 qui n'était pas accessible dans la fenêtre temporelle précédente, devient accessible dans la fenêtre temporelle courante, les dimensions de la matrice globale de covariance sont augmentées pour inclure des nouvelles mesures GNSS relatives à l'ensemble de satellites visibles par ce récepteur GNSS 12.

Il est à noter en outre que comme dans le cas précédent, lesdites nouvelles mesures sont complétées par des données théoriques et relatives à ce satellite dans chaque fenêtre temporelle suivante, jusqu'à ce que le nombre de mesures acquises ne devienne suffisant pour par exemple assurer les précisions demandées.

Lors de l'étape 150 suivante, le module de traitement 22 détermine une variable de test à partir de la matrice globale de covariance $\Gamma$ (composée alors des matrices élémentaires de covariance $\Gamma_i$) et avantageusement à partir de l'ensemble des vecteurs de parité $\mathbf{p}_i$ associés à la fenêtre temporelle courante.

En particulier, cette variable de test est déterminée suivant la formule suivante :

$$\mathbf{Tc} = \sum_{i=1}^{M} \mathbf{p}_i^t \, \Gamma_i^{-1} \mathbf{p}_i$$

Lors de l'étape 160 suivante, le module de traitement 22 compare la variable de test avec un seuil prédéterminé.

Ainsi, par exemple, lorsque cette variable de test est supérieure à ce seuil, il peut être considéré que l'intégrité des mesures est rompue. Autrement, il peut être considéré que les mesures sont intègres.

Lorsque les mesures ne sont pas intègres, dans certains modes de réalisation, il est également possible de déterminer le récepteur GNSS 12 causant la non-intégrité des mesures.

Cela peut par exemple être effectué en éliminant un par un les récepteurs GNSS 12 correspondants jusqu'à obtenir les mesures intègres.

Ensuite, le résultat de la comparaison de la variable de test avec le seuil prédéterminé et éventuellement l'identifiant du récepteur GNSS 12 causant cette non-intégrité sont transmis à tout système intéressé via le module de sortie 23.

Les actions adéquates peuvent alors être entreprises par ce système intéressé.

On conçoit alors que la présente invention présente un certain nombre d'avantages.

Plus particulièrement, l'invention permet d'adapter dynamiquement les dimensions des vecteurs de résidus ainsi que des matrices de covariance correspondantes à tout changement de l'environnement, lorsque notamment un satellite disparait/apparait ou alors, lorsqu'un récepteur devient accessible/inaccessible.

Ainsi, il est devenu possible d'analyser les mesures qui sont pas continues dans l'espace temporel et ainsi d'adapter le procédé de vérification aux conditions changeantes.

En outre, dans la mesure où la matrice de covariance de résidus est utilisée pour déterminer les variables de test, l'invention permet d'attendre une précision plus importante que les méthodes de l'état de la technique utilisant par exemple les matrices de covariance de mesures.

Bien entendu, de nombreuses autres modes de réalisation de l'invention sont également possibles.

## Revendications

1. Procédé de vérification d'intégrité des mesures acquises par une pluralité de récepteurs GNSS (12), chaque récepteur GNSS (12) étant apte à acquérir dans une fenêtre temporelle une pluralité de mesures GNSS par rapport à chaque satellite (14) visible par ce récepteur GNSS (12), le procédé comprenant les étapes suivantes mises en œuvre de manière itérative pour chaque fenêtre temporelle glissante :

   - pour chaque récepteur GNSS :

      + détermination (110) d'un vecteur de résidus à partir des mesures GNSS acquises par ce récepteur (12) dans la fenêtre temporelle correspondante ;
      + détermination (130) d'une matrice élémentaire de covariance des résidus à partir dudit vecteur de résidus ;

   - composition (140) d'une matrice globale de covariance à partir de l'ensemble des matrices élémentaires de covariance ;
   - détermination (150) d'une variable de test à partir de cette matrice globale de covariance ;
   - comparaison (160) de la variable de test avec un seuil prédéterminé ;

   le procédé étant **caractérisé en ce que** la dimension de chaque vecteur de résidus et de chaque matrice élémentaire de covariance est adaptée en fonction du nombre de satellites (14) visibles par le récepteur GNSS (12) correspondant.

2. Procédé selon la revendication 1, dans lequel lorsqu'un satellite (14) n'est plus visible par un récepteur GNSS (12) dans une fenêtre temporelle, les dimensions du vecteur de résidus correspondant et de la matrice élémentaire de covariance correspondante sont diminuées pour exclure toute mesure GNSS relative à ce satellite dans cette fenêtre temporelle.

3. Procédé selon la revendication 1 ou 2, dans lequel lorsqu'un satellite (12) devient visible par un récepteur GNSS dans une fenêtre temporelle, les dimensions du vecteur de résidus correspondant et de la matrice élémentaire de covariance correspondante sont augmentées pour inclure des nouvelles mesures GNSS relatives à ce satellite (12), lesdites nouvelles mesures étant complétées par des données théoriques relatives à ce satellite (12).

4. Procédé selon l'une quelconque des revendications précédentes, dans lequel la dimension de la matrice globale de covariance est adaptée en fonction du nombre de récepteurs GNSS (12) accessibles.

5. Procédé selon la revendication 4, dans lequel lorsqu'un récepteur GNSS (12) n'est plus accessible dans une fenêtre temporelle, les dimensions de la matrice globale de covariance sont diminuées pour exclure toute mesure GNSS relative à ce récepteur GNSS (12).

6. Procédé selon la revendication 4 ou 5, dans lequel lorsqu'un récepteur GNSS (12) devient accessible dans une fenêtre temporelle, les dimensions de la matrice globale de covariance sont augmentées pour inclure des nouvelles mesures GNSS relatives à l'ensemble des satellites (14) visibles par ce récepteur GNSS, lesdites nouvelles mesures étant complétées par des données théorique relative à ces satellites (14).

7. Procédé selon l'une quelconque des revendications précédentes, dans lequel chaque composante de chaque vecteur de résidus correspond à la différence d'une pseudo-distance réelle et pseudo-distance théorique par rapport à un satellite (14) visible par le récepteur GNSS (12) correspondant, la pseudo-distance réelle étant déterminée à partir des mesures GNSS correspondant à ce satellite (14).

**8.** Procédé selon l'une quelconque des revendications précédentes, comprenant en outre une étape (120) de détermination pour chaque vecteur de résidus, d'un vecteur de parité correspondant à une projection de ce vecteur de résidus dans un espace de parité.

**9.** Procédé selon la revendication 8, dans lequel la matrice élémentaire de covariance des résidus est déterminée directement à partir du vecteur de parité associé au vecteur de résidus correspondants.

**10.** Programme d'ordinateur comportant des instructions logicielles qui, lorsqu'elles sont exécutées par un ordinateur, mettent en œuvre le procédé selon l'une quelconque des revendications précédentes.

**11.** Système de vérification d'intégrité (10) des mesures acquises par une pluralité de récepteurs GNSS, comprenant des moyens techniques (21, 22, 23) configurés pour mettre en oeuvre le procédé selon l'une quelconque des revendications 1 à 9.

FIG.1

```
┌─────────────┐
│     110     │
└─────────────┘
       │
       ▼
┌─────────────┐
│     120     │
└─────────────┘
       │
       ▼
┌─────────────┐
│     130     │
└─────────────┘
       │
       ▼
┌─────────────┐
│     140     │
└─────────────┘
       │
       ▼
┌─────────────┐
│     150     │
└─────────────┘
       │
       ▼
┌─────────────┐
│     160     │
└─────────────┘
```

FIG.2

EP 4 782 885 A1

Europäisches Patentamt

European Patent Office

Office européen des brevets

## RAPPORT DE RECHERCHE EUROPEENNE

Numéro de la demande

EP 26 15 4715

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | VINCE VICTOR ET AL: "Optimizing Covariance Estimation Model for Collaborative Integrity Monitoring in Heterogeneous Receiver Satellite Environments", GNSS 2024 - PROCEEDINGS OF THE 37TH INTERNATIONAL TECHNICAL MEETING OF THE SATELLITE DIVISION OF THE INSTITUTE OF NAVIGATION (ION GNSS+ 2024), THE INSTITUTE OF NAVIGATION, 8551 RIXLEW LANE SUITE 360 MANASSAS, VA 20109, USA, 20 septembre 2024 (2024-09-20), pages 3691-3704, XP056020126, * le document en entier * ----- | 1-11 | INV. G01S19/20 G01S19/21 |
| X | US 2014/232595 A1 (RIFE JASON [US]) 21 août 2014 (2014-08-21) * alinéa [0009] - alinéa [0011] * * alinéa [0056] - alinéa [0072] * * alinéa [0092] - alinéa [0093] * * figures 1-6 * ----- | 1,2,4,5, 7-11 | |

DOMAINES TECHNIQUES RECHERCHES (IPC)

G01S

Le présent rapport a été établi pour toutes les revendications

| Lieu de la recherche | Date d'achèvement de la recherche | Examinateur |
|---|---|---|
| Munich | 5 juin 2026 | Galmiche, Aurélien |

EPO FORM 1503 03.82 (P04C02)

**EP 4 782 885 A1**

## ANNEXE AU RAPPORT DE RECHERCHE EUROPEENNE
## RELATIF A LA DEMANDE DE BREVET EUROPEEN NO.

EP 26 15 4715

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-06-2026

| Document brevet cité au rapport de recherche | Date de publication | Membre(s) de la famille de brevet(s) | Date de publication |
|---|---|---|---|
| US 2014232595 A1 | 21-08-2014 | US 2014232595 A1 | 21-08-2014 |
|  |  | WO 2013003662 A2 | 03-01-2013 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **J. RIFE**. Collaboration-Enhanced Receiver Integrity Monitoring (CERIM). *14th International IEEE Conference on Intelligent Transportation Systems (ITSC)*, 2011